# EUROPÄISCHE PATENTSCHRIFT

(11) **EP 1 261 822 B1**
(45) Veröffentlichungstag und Bekanntmachung des Hinweises auf die Patenterteilung: **10.09.2003**
(21) Anmeldenummer: 01903740.7
(22) Anmeldetag: 10.02.2001
(51) Int. Cl.: F16K 11/074

(54) **TEMPERATURGEREGELTES MISCHVENTIL**
TEMPERATURE-CONTROLLED MIXER VALVE
ROBINET MELANGEUR A THERMOREGULATEUR

(30) Priorität: 12.02.2000 DE 10006375
(43) Veröffentlichungstag der Anmeldung: 04.12.2002
(73) Patentinhaber: Hansgrohe AG, 77761 Schiltach (DE)
(72) Erfinder: GINTER, Gerhard, 78144 Tennenbronn (DE); GINTER, Andreas, 78713 Schramberg-Heiligenbronn (DE); WANNER, Franz, 77743 Neuried (DE)
(74) Vertreter: Patentanwälte Ruff, Wilhelm, Beier, Dauster & Partner
(86) Internationale Anmeldenummer: EP0101488
(87) Internationale Veröffentlichungsnummer: WO01059341

(56) Entgegenhaltungen:
- EP-A- 0 356 402
- WO-A-92/22862
- DE-A- 3 244 121
- DE-A- 3 614 735
- DE-A- 3 903 997
- DE-A- 4 208 241
- US-A- 5 535 943
- US-A- 5 657 791

## Beschreibung

Die Erfindung geht aus von einer Thermostatarmatur für sanitäre Zwecke. Sanitäre Thermostatarmaturen dienen dazu, beispielsweise an einer Dusche ein Mischwasser mit einer Mischtemperatur abzugeben, die zwischen der Temperatur des kalten Wassers und der des warmen Wassers liegt. Üblicherweise haben Thermostatarmaturen eine Betätigungseinrichtung, mit der die Menge des ausströmenden Wassers eingestellt werden kann. Ein zweites Betätigungselement dient dazu, die Soll-Temperatur des Mischwassers durch Eingriff an dem Thermostatventil zu bestimmen.

Ebenfalls bekannt sind Einhebelmischventile, bei denen durch eine Betätigungseinrichtung in einer ersten Richtung die Menge des Wassers und in einer zweiten Richtung die Temperatur des Wassers verändert werden kann.

Es ist bereits eine sanitäre Mischbatterie mit einer Thermostatregelung bekannt (WO 92/22862), bei der die Menge des Mischwassers durch ein Ventil mit Scheibensteuerung bestimmt wird. Die Scheibensteuerung enthält eine feststehende Verteilerscheibe und eine dieser gegenüber in einer Richtung bewegbare Steuerscheibe. Zur Veränderung der Mischwassertemperatur ist eine Betätigungseinrichtung an dem Thermostatventil vorhanden.

Ebenfalls bekannt ist ein thermostatgeregeltes Mischventil (DE 19716307), bei dem eine Scheibensteuerung für die Mengenregulierung vorgesehen ist. Die bewegbare Steuerscheibe ist in einer Richtung gegenüber der feststehenden Verteilerscheibe bewegbar. Zur Veränderung der Mischwassersolltemperatur dient die Betätigungseinrichtung, mit der auch die Menge des Mischwassers eingestellt werden kann.

Der Erfindung liegt die Aufgabe zugrunde, eine temperaturgeregelte Mischeinrichtung zu schaffen, die sich in der Betätigung und in den Einbaumaßen nicht von bestehenden Einhebelmischern unterscheidet.

Zur Lösung dieser Aufgabe schlägt die Erfindung ein temperaturgeregeltes Mischventil mit den Merkmalen des Anspruchs 1 vor. Weiterbildungen der Erfindung sind Gegenstand der abhängigen Ansprüche, deren Wortlaut ebenso wie der Wortlaut der Zusammenfassung durch Bezugnahme zum Inhalt der Beschreibung gemacht wird.

Die beiden Keramikscheiben bilden zusammen eine Scheibensteuerung. Sowohl die feststehende als auch die bewegbare Keramikscheibe enthalten Öffnungen, die in der Steuerfläche ausmünden. Die Steuerfläche ist diejenige Fläche der beiden Steuerscheiben, die die Anlagefläche bildet. Durch mehr oder weniger weites Überdecken dieser Öffnungen wird eine Veränderung des Querschnitts bewirkt. Bei dem von der Erfindung vorgeschlagenen Ventil dient diese Scheibensteuerung ausschließlich der Mengensteuerung des Mischwassers, während die Einstellung und Regelung der Mischwassertemperatur von der Regeleinheit übernommen wird.

In Weiterbildung der Erfindung kann vorgesehen sein, dass die Achse des Thermostaten und damit auch seine Wirkungsrichtung parallel zu der Steuerfläche der Steuerscheiben verläuft. Dies ermöglicht eine platzsparende Anordnung des Mischventils, so dass es in einem kleinen Gehäuse untergebracht werden kann.

In nochmaliger Weiterbildung der Erfindung kann vorgesehen sein, dass die Regeleinheit derart angeordnet ist, dass sie mit der Steuerscheibe mit bewegt wird. Auch dies dient dazu, die Anordnung klein bauen zu können.

In Weiterbildung der Erfindung kann vorgesehen sein, dass die bewegbare Steuerscheibe in einem zweiten Freiheitsgrad bewegbar ausgebildet ist, wobei diese Bewegung in einem zweiten Freiheitsgrad vorzugsweise durch den gleichen Hebel bewirkt werden kann, der zur Steuerung der Menge des Mischwassers verwendet wird. Diese Bewegung in einem zweiten Freiheitsgrad kann zu anderen Zwecken ausgenutzt werden.

Insbesondere kann vorgesehen sein, dass die Bewegung der Steuerscheibe in dem zweiten Freiheitsgrad nicht zu einer Änderung des Verhältnisses der Strömungsquerschnitte der Öffnungen der Steuerscheiben zwischen dem Strömungsweg für kaltes und dem Strömungsweg für warmes Wasser führt.

In Weiterbildung der Erfindung kann vorgesehen sein, dass die Betätigungseinrichtung in einer zweiten Bewegungsrichtung betätigbar ist, insbesondere zur Änderung der Einstellung der Mischwassertemperatur. Hiermit kann erreicht werden, dass das sanitäre Mischventil in genau der gleichen Weise bedient werden kann wie ein herkömmliches Einhebelmischventil, jedoch mit dem Unterschied, dass dann der Regler für die Mischwassertemperatur in seiner Sollwertstellung verändert wird.

Zusätzlich kann vorgesehen sein, dass die Einstellung der Solltemperatur des Mischventils justiert werden kann, so dass beispielsweise in einer beliebigen oder der Mittelstellung der Betätigungseinrichtung die Temperatur auf beispielsweise 38° einjustiert werden kann.

In Weiterbildung der Erfindung kann vorgesehen werden, die Regeleinheit derart anzuordnen, dass der Ausgang des Mischwassers und/oder das Dehnstoffelement in Strömungsrichtung gesehen zwischen dem Ventilsitz für das warmes Wasser und dem Ventilsitz für das kalte Wasser angeordnet ist. Die beiden Strömungen sind dann stromab des jeweiligen Ventilsitzes gegeneinander gerichtet, so dass sich die beiden Strömungen besser vermischen und dadurch die Erfassung der Isttemperatur des Mischwassers durch das Regelelement gewährleistet ist.

Das Regelelement, das mit der bewegbaren Steuerscheibe mit bewegt werden soll, kann beispielsweise nach einem weiteren Merkmal der Erfindung in der bewegbaren Steuerscheibe angeordnet sein. Diese kann die gesamte Geometrie für die Ventilsitze und die Zu- und Ableitung enthalten. Die Steuerscheibe kann z.B. durch Keramikspritzen hergestellt werden.

Es ist aber ebenfalls möglich und wird von der Erfindung vorgeschlagen, dass das Regelelement in dem Mitnehmer der bewegbaren Steuerscheibe angeordnet werden kann. Dieser Mitnehmer kann beispielsweise aus Kunststoff gespritzt werden.

In Weiterbildung der Erfindung kann vorgesehen werden, zur Änderung der Solltemperatur eine Exzenterfläche vorzusehen, an der ein mit der Regeleinheit wirkverbundenes Bauteil angreift, beispielsweise eine Stellkappe, die bei der Bewegung der Steuerscheibe an der Exzenterfläche abgleitet.

Die Stellkappe ist vorzugsweise derart in der bewegbaren Steuerscheibe und/oder deren Mitnehmer angeordnet, dass die genannten Teile miteinander bewegt werden können.

In Weiterbildung der Erfindung kann vorgesehen sein, dass die Exzenterfläche an der Innenseite der Wand eines Kartuschengehäuses ausgebildet ist. Dies kann einstückig sein.

Es ist aber ebenfalls möglich, dass die Exzenterfläche an der Innenseite eines Schiebers ausgebildet ist, der innerhalb eines Kartuschengehäuses angeordnet ist und sich in Umfangsrichtung erstreckt.

Insbesondere kann vorgesehen sein, dass sich dieser Schieber in Umfangsrichtung gegenüber dem Kartuschengehäuse verstellen lässt, um dadurch eine Justierung der Nullposition des Mischventils / Thermostatventils zu ermöglichen.

Erfindungsgemäß kann vorgesehen sein, dass die Stellkappe derart mit der Regeleinheit wirkverbunden ist, dass bei einer Bewegung der Steuerscheibe in Mengenänderungsrichtung keine Verstellung des Thermostaten erfolgt.

Dies kann beispielsweise dadurch geschehen, dass die Regeleinheit mit einem Stößel in einer Nut in der Stellkappe abstützt. Die Nut erstreckt sich in der Richtung der Mengen-änderung der Steuerscheibe.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
Fig. 1 einen Axialschnitt durch eine Ventilkartusche nach der vorliegenden Erfindung;
Fig. 2 einen Axialschnitt längs einer um 90° versetzten Ebene;
Fig. 3 einen Querschnitt durch die Anordnung nach Fig. 1 und 2;
Fig. 4 eine Aufsicht auf die feststehende Verteilerscheibe von oben in Fig. 1;
Fig. 5 eine schematische Aufsicht auf die bewegbare Steuerscheibe von oben;
Fig. 6 schematisch die Zuordnung zwischen beiden Keramikscheiben in mehreren Positionen;
Fig. 7 einen der Fig. 1 entsprechenden Schnitt bei einer weiteren Ausführungsform;
Fig. 8 einen weiteren Axialschnitt durch eine weitere Ausführungsform;
Fig. 9 einen Axialschnitt durch eine nochmals weitere Ausführungsform.

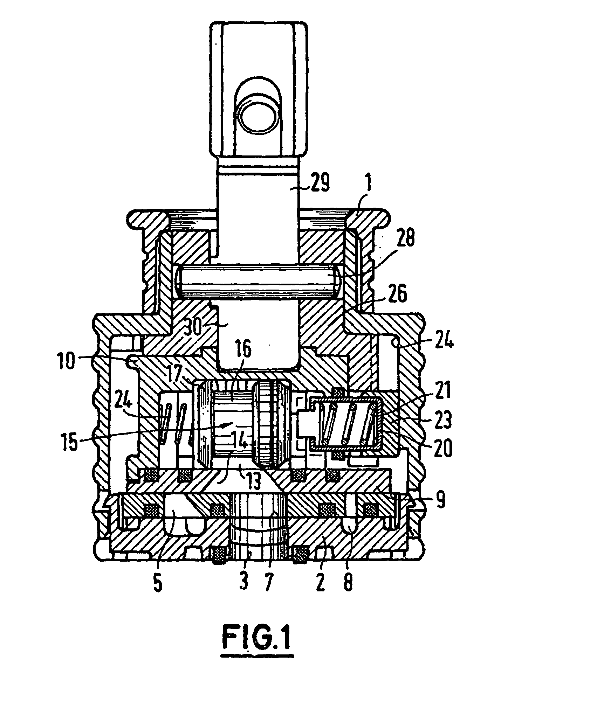

Die Figur 1 zeigt einen Axialschnitt durch eine Ventilkartusche, die zum Einsetzen in ein Armaturengehäuse bestimmt ist. Die Ventilkartusche 1 ist durch einen Boden 2 abgeschlossen, der Öffnungen aufweist, die mit Öffnungen in dem Boden eines Armaturengehäuses übereinstimmen. Die Ventilkartusche wird in einen Aufnahmeraum eines solchen Armaturengehäuses eingesetzt, das die Verbindungen zwischen den Zuleitungen und der Ableitung für Mischwasser enthält bzw. herstellt. In dem Kartuschengehäuse ist nur das eigentliche Mischventil enthalten. In der Figur 1 ist nur eine Öffnung 3 in dem Boden 2 der Kartusche 1 dargestellt, bei der es sich um die Öffnung für das das Mischventil verlassende Mischwasser handelt. Oberhalb des Bodens 2 ist in dem Kartuschengehäuse 1 eine feststehende aus Keramik bestehende Verteilerscheibe 4 gehaltert, die ebenfalls Öffnungen 5 aufweist. Diese Öffnungen 5 gehen von der auf dem Boden 2 aufliegenden Unterseite 6 der Steuerscheibe 4 bis zu der gegenüberliegenden Steuerfläche 7 durch. Sie verlaufen allerdings nicht unbedingt in diesem Schnitt geradlinig, sondern können auch schräg verlaufen, so dass die Mündungen der Öffnungen 5 in der Unterseite 6 und der Steuerfläche 7 in ihrer Position nicht übereinzustimmen brauchen. Die Wasserführungen, die durch die einzelnen Öffnungen hindurchgehen, sind durch Dichtungen gegenseitig abgedichtet, die in Nuten 8 angeordnet werden.

Auf der feststehenden Verteilerscheibe 4 liegt eine bewegbare Steuerscheibe 9, die in einer Halterung 10 gehalten wird. Die bewegbare Steuerscheibe 9 weist Öffnungen 11, 12 auf, die mit den Öffnungen 5 der feststehenden Steuerscheibe 4 in Übereinstimmung gebracht werden können. Beispielsweise ist die Öffnung 11 für warmes und die Öffnung 12 für kaltes Wasser bestimmt. Beide Öffnungen 11, 12 führen in einen Ringraum innerhalb der aus bewegbarer Steuerscheibe 9 und Halterung 10 bestehenden Baueinheit. Aus diesem Innenraum 13 führt ein kreisrunder Durchbruch 14 in der Steuerscheibe 9 durch eine Öffnung in der feststehenden Verteilerscheibe. Aus dem Raum 13 kann das Wasser daher durch die Auslassöffnung 3 des Bodens 2 das Ventil verlassen.

Im den innerhalb der bewegbaren Steuerscheibe 9 gebildeten Raum ist eine Regeleinheit 15 eingesetzt, die einen an sich neuen Aufbau besitzt. Die Regeleinheit 15 enthält ein Dehnstoffelement 16, das auf Temperaturänderungen anspricht und dementsprechend reagiert. Die Regeleinheit weist ein kolbenförmiges Ventilelement 17 auf, das sich durch die Wirkungsweise des Dehnstoffelementes axial verschieben lässt. Das kolbenförmige Ventilelement 17 ist jeweils der Randfläche um den jeweiligen Durchbruch zugeordnet und bildet dort jeweils einen Ventilsitz, von denen der eine Ventilsitz für das kalte und der andere für das warme Wasser bestimmt ist.

Die Regeleinheit 15 enthält das Ventilelement 17, in dem das Dehnstoffelement 16 angeordnet ist. Dieses wirkt über einen Stößel 19, der von einem weiteren Stößel 20 umgeben ist. Zwischen den beiden Stößeln 19, 20 ist eine Druckfeder 21 eingesetzt. Der äußere Stößel 20 liegt an der Innenfläche 22 einer Stellkappe 23 an, die mit ihrer Außenseite an der Innenseite 24 des Kartuschengehäuses anliegt. Wenn sich das Dehnstoffelement 16 ausdehnt, so verschiebt es den Stößel 19 so, dass es über die Einheit von der Feder 21 und dem Stößel 20 das Ventilelement 17 der Regeleinheit 15 nach links verschiebt, und zwar gegen die Wirkung einer weiteren Druckfeder 24. Bei dieser Verschiebung verringert sich der Strömungsquerschnitt des durch den Durchbruch und das Ventilelement 17 gebildeten Ventils, während sich auf der gegenüberliegende Seite der Abstand zwischen dem Ventilelement 17 und dem zugehörigen Ventilsitz vergrößert. Auf diese Weise wird das Verhältnis von Strömungsquerschnitt des warmen Wassers zu dem Strömungsquerschnitt des kalten Wassers verändert. Beide Strömungen fließen durch die Öffnungen 25 gebildet durch das Ventilelement 17 hindurch in den Raum 13, wo sie sich vermischen. Das Dehnstoffelement 16 ist der Temperatur dieses Mischwassers ausgesetzt. Die Solltemperatur kann durch die radiale Bewegung der Stellkappe 23 und damit durch Verändern der Position des Ventilelements 17 geändert werden. Diese radiale Verschiebung der Stellkappe 23 wird im folgenden noch erklärt werden.

Der Mitnehmer 10 mit der bewegbaren Steuerscheibe 9 wird durch die Lagerscheibe 26 geführt, die auch eine Öffnung zur Führung der Stellkappe 23 enthält. Die Lagerscheibe 26 weist eine Bohrung 27 auf, durch die die Welle 28 eines Steuerhebels 29 gesteckt ist. Durch Verdrehung des Steuerhebels 29 kann daher die Lagerscheibe 26 und mit diesen die bewegbare Steuerscheibe 9 verdreht werden.

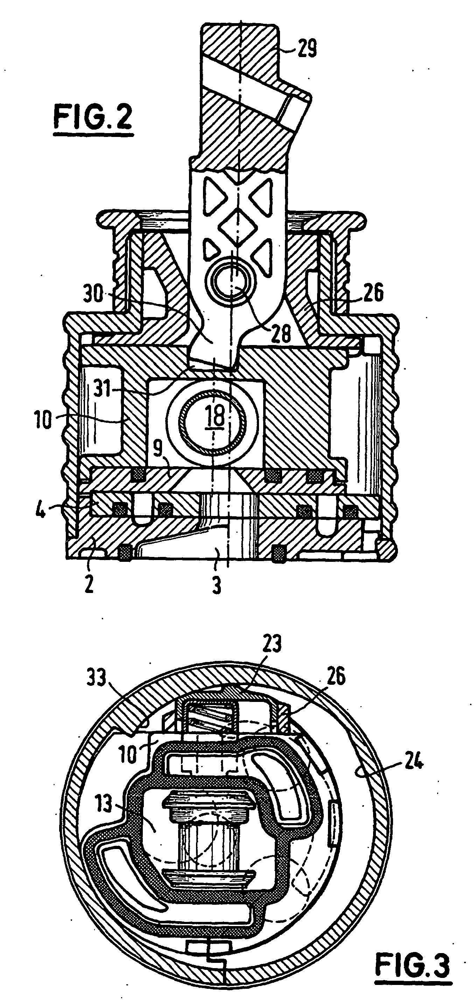

Fig. 2 zeigt einen Schnitt in einer um 90 Grad versetaten Ebene. Der Steuerhebel 29 greift mit seinem unteren Ende 30 in eine Vertiefung 31 des Mitnehmers 10 ein. Eine Verdrehung des Steuerhebels 29 um die Welle 28 führt daher zu einer Verschiebung des Mitnehmers 10 und damit der bewegbaren Steuerscheibe 9 längs der Steuerfläche 7.

Fig. 3 zeigt nochmals die Ausbildung und Anordnung der Regeleinheit 15. Die möglichen Strömungen des Wassers sind durch Pfeile dargestellt. Die Strömungen sind gegeneinander gerichtet, so dass in dem Raum 13 eine gute Durchmischung erfolgen kann.

Die Verschiebung der bewegbaren Steuerscheibe 9 durch Schwenken des Hebels 29 um die Welle 28 führt zu einer Bewegung in Figur 3 von rechts nach links oder links nach rechts. Bei dieser Verschiebung bleibt die Stellkappe 23 in der Lagerhülse 26 festgehalten, bewegt sich also nicht mit. Statt dessen gleitet der äußere Stößel 20 an der entsprechenden Fläche der Stellkappe 23.

Die Stellkappe 23 liegt an der Innenseite 24 des Kartuschengehäuses 1 an. Diese Innenseite weist eine Exzenterfläche 33 auf, die sich über etwa ein Viertel bis ein Drittel des Umfangs erstreckt. Bei einer Verdrehung der bewegbaren Steuerscheibe 9 wird dadurch eine Änderung der Position des Ventilelements 17 bewirkt, während bei einer Verschiebung der bewegbaren Steuerscheibe 9 die Stellkappe 23 nicht mit bewegt wird. Dadurch führt eine Änderung der Menge des aus den Mischventil austretenden Wassers nicht zu einer Änderung von dessen Temperatur.

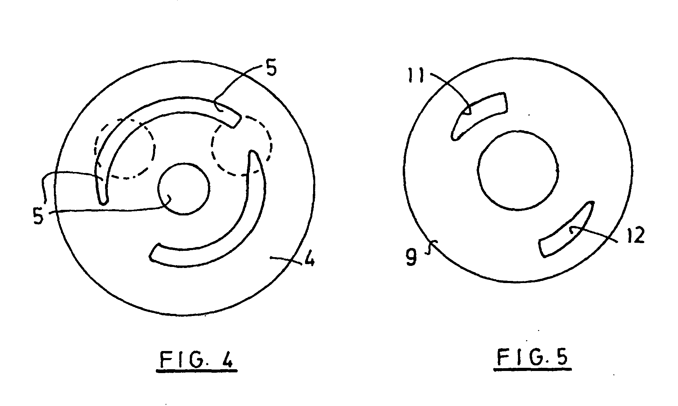

Figur 4 zeigt eine Aufsicht auf die Steuerfläche 7 der feststehenden Verteilerscheibe 4. Unterhalb der feststehenden Verteilerscheibe sind die Zuleitungsöffnungen in dem Boden 2 der Kartusche 1 durch gestrichelte Kreise angedeutet. In der Steuerfläche 7 der Scheibe 4 münden die Durchgangsöffnungen 5 für das kalte und das warmes Wasser in der Form von schmalen in Umfangsrichtung verlaufenden Schlitzen. Beide Öffnungen weisen von dem Mittelpunkt der Scheibe 4 einen unterschiedlichen Abstand auf. Die Außenkanten und Innenkanten verlaufen konzentrisch. In Mittelpunkt der Scheibe ist eine kreisrunde Öffnung angeordnet, die als Auslassöffnung für das Mischwasser dient.

Fig. 5 zeigt eine schematische Aufsicht auf die untere Fläche der bewegbaren Steuerscheibe 9 von oben. Diese Darstellung ist so gewählt, dass hier die Ausmündung der Öffnungen 11, 12 in der Unterseite der Scheibe 9 dargestellt sind, und zwar in der gleichen Orientierung wie Fig. 4. Diese Darstellung ist so gewählt, dass man durch Aufeinanderlegen der beiden Darstellungen die tatsächliche Mischsituation erkennen kann. In der Mitte der bewegbaren Steuerscheibe 9 ist eine ebenfalls kreisrunde Öffnung 34 angeordnet, deren Durchmesser deutlich größer ist als der Durchmesser der zentralen Durchgangsöffnung 5 der feststehenden Verteilerscheibe 4.

Die beiden Öffnungen 11, 12 für das kalte bzw. warme Wasser sind ebenfalls als konzentrische schmale bogenförmige Schlitze ausgebildet, deren in radialer Richtung gemessene Breite der Breite der Öffnungen 5 gleich ist, deren Bogenlänge aber deutlich kürzer ist.

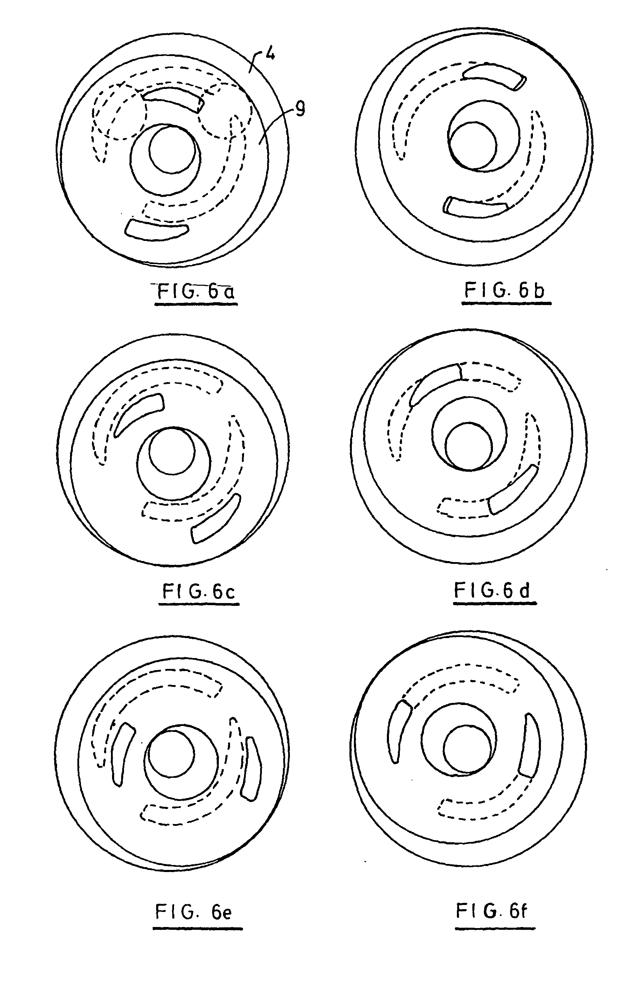

Figur 6 zeigt verschiedene mögliche Positionen der beiden Steuerscheiben 4, 9 von oben, und zwar in verschiedenen verschobenen und verdrehten Positionen. Fig. 6a zeigt die Position, in der eine heiße Temperatur eingestellt ist, das Ventil aber geschlossen bleibt. Dies kann man dadurch erkennen, dass die kleineren bogenförmigen Schlitze 11, 12 der oberen Steuerscheibe 9 sich nicht mit den Öffnungen 5 der unteren Verteilerscheibe 4 überdecken.

Fig. 6b zeigt bei heiß eingestellter Temperatur die geöffnete Stellung. Durch Verschiebung der bewegbaren Steuerscheibe 9 aus der Position der Fig. 6a nach rechts oben ohne Verdrehung entsteht diese Position.

Fig. 6 c zeigt eine mittlere Stellung, das heißt eine Stellung bei mittlerer Temperatur in geschlossenem Zustand. Verschiebt man die bewegbare Steuerscheibe 9 nach oben, so gelangen allmählich die Öffnungen der oberen und unteren Steuerscheibe in Deckung, so dass schließlich die Position der Fig. 6 d entsteht, in der das Ventil vollständig geöffnet ist.

Die Figur 6 e und 6f zeigen die Positionen "geschlossen" und "geöffnet" bei kalter Temperatureinstellung.

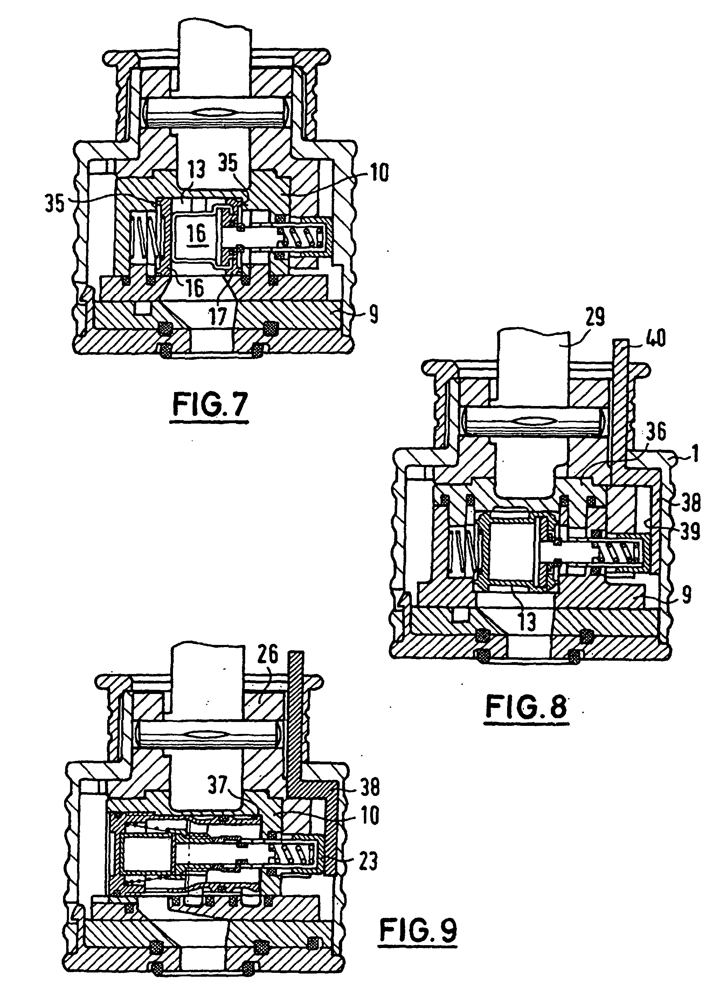

Fig. 7 zeigt einen der Figur 1 entsprechenden Schnitt bei einer zweiten Ausführungsform. Unterschiedlich ist hier im wesentlichen nur die Anordnung der Regeleinheit. Die bewegbare Steuerscheibe 9 ist als ebene Scheibe ausgebildet, so dass der Innenraum 13 innerhalb des Mitnehmers 10 ausgebildet ist.

Der Innenraum 13 bildet an beiden Enden als Übergang zu den Eintrittsräumen für das kalte und warme Wasser je eine Schulter 35, die die Ventilsitze für das Ventilelement 17 bilden. Das Ventilelement ist in ähnlicher Weise aufgebaut wie bei der Ausführungsform nach Fig. 1. Auch hier fließt sowohl das kalte als auch das warme Wasser axial von außen nach innen in den Raum 13, in dem das Dehnstoffelement 16 in der Regeleinheit angeordnet ist. Von dort aus fließt das Mischwasser durch einen zentralen Abgang aus der Kartusche heraus.

Figur 8 zeigt eine Ausführungsform, bei der die Aufnahme für die Regeleinheit in der bewegbaren Steuerscheibe 9 angeordnet ist, wobei diese Aufnahme durch einen Deckel 36 abgeschlossen ist, in den der Steuerhebel 29 eingreift. Wieder werden die Ventilsitze von Ringflächen gebildet, und wieder strömt das Wasser axial von außen nach innen und aus dem Raum 13 radial aus dem Ventil heraus.

Fig. 9 zeigt eine geänderte Ausführungsform, bei der die Regeleinheit 15 grundsätzlich einen anderen Aufbau hat. Sie ist in dem Mitnehmer bzw. der Halterung 10 angeordnet. Der Verschlusskörper 37 ist jetzt als einstückige Hülse ausgebildet, deren axiale Stirnenden mit den dort vorhandene Gegenflächen die Ventilsitze bilden.

Bei den Ausführungsformen nach Fig. 8 und 9 sind an der Innenseite des Kartuschengehäuses 1 jeweils Schieber 38 angeordnet, deren radiale Innenseiten 39 die Exzenterflächen für die in dem Mitnehmer 26 gehaltene Stellkappe 23 bilden. Die Schieber 38 weisen einen axial aus dem Gehäuse 1 zu dessen Außenseite hin herausragenden Ansatz 40 auf. Mit Hilfe dieses Ansatzes 40 kann der Exzenter in Umfangsrichtung, verschoben werden, so dass die Nullstellung des Exzenters in Umfangsrichtung geändert werden kann. Damit wird es möglich, beispielsweise die Temperatur von 38° einer bestimmten Position des Steuerhebels zuzuordnen.

## Patentansprüche

1. Temperaturgeregeltes Mischventil , mit
1.1 einer feststehenden Verteilerscheibe (4),
1.2 einer bewegbaren Steuerscheibe (9), die
1.2.1 der feststehenden Verteilerscheibe (4) gegenüber in mindestens einem Freiheitsgrad bewegbar ist und
1.2.2 an einer Steuerfläche (7) der feststehenden Verteilerscheibe (4) flächig anliegt,
1.3 einer Betätigungseinrichtung (29) zur Bewegung der bewegbaren Steuerscheibe (9) und dadurch zur Steuerung der Mischwassermenge, sowie mit
1.4 einer Regeleinheit (15) zur Regelung der Mischwassertemperatur, **dadurch gekennzeichnet, dass** die bewegbare Steuerscheibe (9) in einem zweiten Freiheitsgrad bewegbar ist, vorzugsweise durch die Betätigungseinrichtung (29).

2. Mischventil nach Anspruch 1, bei dem die Achse der Regeleinheit (15) parallel zur Steuerfläche (7) der Keramikscheiben (4, 9) verläuft.

3. Mischventil nach Anspruch 1 oder 2, bei dem die Achse der Regeleinheit quer zur Schließbewegung angeordnet ist.

4. Mischventil nach einem der vorhergehenden Ansprüche, bei dem die Regeleinheit (15) mit der Steuerscheibe (9) mit bewegt wird.

5. Mischventil nach einem der vorhergehenden Ansprüche, bei dem die Bewegung der Steuerscheibe (9) in dem zweiten Freiheitsgradgrad nicht zu einer Änderung des Verhältnisses der Strömungsquerschnitte der Öffnungen für kaltes und warmes Wasser in den Keramikscheiben (4, 9) führt.

6. Mischventil nach einem der vorhergehenden Ansprüche, bei dem die Betätigungseinrichtung (29) in einer zweiten Bewegungsrichtung zur Änderung der Einstellung der Solltemperatur des temperaturgeregelten Mischventils / Thermostatventils (15) betätigbar ist.

7. Mischventil nach einem der vorhergehenden Ansprüche, mit einer Einrichtung zur Justierung der Einstellung der Soll-Temperatur.

8. Mischventil nach einem der vorhergehenden Ansprüche, bei dem die Regeleinheit (15) derart angeordnet ist., dass der Mischwasserausgang und/oder das Dehnstoffelement (16) in Strömungsrichtung zwischen dem Ventilsitz für das warme Wasser und dem Ventilsitz für das kalte Wasser angeordnet ist.

9. Mischventil nach einem der vorhergehenden Ansprüche, bei dem die Regeleinheit (15) in der bewegbaren Steuerscheibe (9) angeordnet ist.

10. Mischventil nach einem der vorhergehenden Ansprüche, bei dem die Regeleinheit (15) in einem Mitnehmer (10) für die bewegbare Steuerscheibe (9) angeordnet ist.

11. Mischventil nach einem der vorhergehenden Ansprüche, bei dem zur Änderung der Solltemperatur eine Exzenterfläche (24) vorgesehen ist, an der ein mit dem Regelelement (15) wirkverbundenes Bauteil, insbesondere eine Stellkappe (23) angreift.

12. Mischventil nach Anspruch 11, bei dem die Stellkappe (23) mit der Verdrehung der bewegbaren Steuerscheibe mit verdreht wird.

13. Mischventil nach Anspruch 11 oder 12, bei dem die Exzenterfläche (24) an der Innenwand eines Kartuschengehäuses (1) ausgebildet ist.

14. Mischventil nach Anspruch 11 oder 12, bei dem die Exzenterfläche (24) an einem an der Innenwand eines Kartuschengehäuses (1) angeordneten Schieber (38) ausgebildet ist.

15. Mischventil nach Anspruch 14, bei dem der Schieber (38) derart ausgebildet ist, dass er sich in Umfangsrichtung verstellen lässt.

16. Mischventil nach einem der Ansprüche 11 bis 15, bei dem die Stellkappe (23) derart mit der Regeleinheit (15) wirkverbunden ist, dass bei einer Bewegung der Steuerscheibe (9) in Mengenänderungsrichtung keine Verstellung der Regeleinheit (15) erfolgt.

17. Mischventil nach einem der Ansprüche 11 bis 16, bei dem die Regeleinheit (15) mit einem Stößel (20) in einer Nut in der Stellkappe (23) angreift, die sich in Mengenänderungsrichtung erstreckt.

18. Mischventil nach einem der vorhergehenden Ansprüche, bei dem keine Dichtung zwischen den beiden Ventilen vorgesehen ist.

19. Mischventil nach einem der vorhergehenden Ansprüche, bei dem die Regeleinheit aus einem konventionellen Thermostat mit Dehnstoffelement und Steuerbuchse besteht.

## Claims

1. A temperature-controlled mixer valve having
1.1 a fixed distributor disk (4),
1.2 a movable control disk (9) that
1.2.1 is movable with respect to the distributor disk (4) in at least one degree of freedom and
1.2.2 rests on a control surface (7) of the distributor disk (4), in close contact therewith,
1.3 an actuating device (29) for moving the movable control disk (9) and thereby controlling the flow rate of mixed water, along with
1.4 a control unit (15) for controlling the temperature of mixed water, wherein the movable control disk (9) is movable in a second degree of freedom, preferably by the actuating device (29).

2. A mixer valve according to claim 1, wherein the axis of the control unit (15) is parallel to the control surfaces (7) of the ceramic disks (4, 9).

3. A mixer valve according to claim 1 or claim 2, wherein the axis of the control unit is arranged transversely to the closure motion.

4. A mixer valve according to any of the foregoing claims, wherein the control unit (15) is comoved together with the control disk (9).

5. A mixer valve according to any of the foregoing claims, wherein the motion of the control disk (9) in the second degree of freedom leads to no change in the ratios of the flow cross-sections of the openings in the ceramic disks (4, 9) for hot and cold water.

6. A mixer valve according to any of the foregoing claims, wherein the actuating device (29) is actuatable in a second motional direction in order to change the setting of the temperature setpoint of the temperature-controlled mixer valve/thermostat valve (15).

7. A mixer valve according to any of the foregoing claims having a device for adjusting the setting of the temperature setpoint.

8. A mixer valve according to any of the foregoing claims, wherein the control unit (15) is arranged such that the mixed-water outlet and/or element (16) fabricated from an elastic material is arranged between the valve seat for hot water and the valve seat for cold water in the direction of flow.

9. A mixer valve according to any of the foregoing claims, wherein the control unit (15) is arranged in the movable control disk (9).

10. A mixer valve according to any of the foregoing claims, wherein the control unit (15) is arranged in a driver (10) for the movable control disk (9).

11. A mixer valve according to any of the foregoing claims, wherein an eccentric surface (24) on which a component, in particular, an adjusting cap (23), operationally connected to the control element (15) abuts is provided for changing the temperature setpoint.

12. A mixer valve according to claim 1, wherein the adjusting cap (23) is corotated together with the movable control disk (9).

13. A mixer valve according to claim 1 or claim 2, wherein the eccentric surface (24) is formed on the inner wall of a cartridge housing (1).

14. A mixer valve according to claim 1 or claim 2, wherein the eccentric surface (24) is formed on a slide (38) arranged on the inner wall of a cartridge housing (1).

15. A mixer valve according to claim 14, wherein the slide (38) is shaped such that it may be adjusted in the tangential direction.

16. A mixer valve according to any of claims 1 - 5, wherein the adjusting cap (23) is operationally connected to the control unit (15) such that no readjustment of the control unit (15) will occur when the control disk (9) is moved in the direction that will yield a change in flow rate.

17. A mixer valve according to any of claims 1 - 6, wherein the control unit (15) abuts against a plunger (20) extending along the direction that will yield a change in flow rate riding in a groove in the adjusting cap (23).

18. A mixer valve according to any of the foregoing claims, wherein no seal is provided between the two valves.

19. A mixer valve according to any of the foregoing claims, wherein the control unit consists of a conventional thermostat having an element fabricated from an elastic material and a control sleeve.

## Revendications

1. Une vanne mélangeuse à réglage de température avec
1.1 un disque de distribution fixe (4),
1.2 un disque de commande (9) mobile qui
1.2.1 se déplace par rapport au disque de distribution (4) selon au moins un degré de liberté, et qui est
1.2.2 disposé sur une surface de commande (7) du disque de distribution fixe (4),
1.3 un dispositif de commande (29) pour le déplacement du disque de commande mobile (9), servant ainsi au réglage de débit de l'eau mélangée, ainsi
1.4 qu'un dispositif de régulation (15) pour la régulation de la température de l'eau mélangée, **caractérisée par le fait que** le disque mobile (9) peut se déplacer suivant un deuxième degré de liberté, de préférence par la manipulation du dispositif de commande (29).

2. Une vanne mélangeuse conforme à la revendication 1, où l'axe du dispositif de régulation (15) est parallèle à la surface de commande (7) des disques de céramique (4, 9).

3. Une vanne mélangeuse conforme aux revendications 1 ou 2, où l'axe du dispositif de régulation est disposé perpendiculairement au mouvement de fermeture.

4. Une vanne mélangeuse conforme à l'une des revendications précédentes,
où le dispositif de régulation (15) se déplace en même temps que le disque de commande (9).

5. Une vanne mélangeuse conforme à l'une des revendications précédentes,
où le déplacement du disque de commande (9) suivant le deuxième degré de liberté ne provoque pas de modification de dimension de la section du flux des ouvertures pour l'eau chaude et l'eau froide dans les disques de céramique (4, 9).

6. Une vanne mélangeuse conforme à l'une des revendications précédentes,
où le dispositif de commande (29) peut être déplacé dans une seconde direction pour la modification du réglage de la température de consigne de la vanne mélangeuse à réglage thermostatique / vanne thermostatique (15).

7. Une vanne mélangeuse conforme à l'une des revendications précédentes,
qui comporte un dispositif d'ajustage de la température de consigne.

8. Une vanne mélangeuse conforme à l'une des revendications précédentes,
où le dispositif de régulation (15) est disposé de telle manière que la sortie de l'eau mélangée et/ou de l'élément de dilatation (16) se situe dans le sens du flux, entre le siège de soupape pour l'eau chaude et le siège de soupape pour l'eau froide.

9. Une vanne mélangeuse conforme à l'une des revendications précédentes,
où le dispositif de régulation (15) est disposé dans le disque de commande mobile (9).

10. Une vanne mélangeuse conforme à l'une des revendications précédentes,
où le dispositif de régulation (15) est disposé dans un dispositif d'entraînement (10) pour le disque de commande mobile (9).

11. Une vanne mélangeuse conforme à l'une des revendications précédentes,
où est prévu une surface excentrique (24) pour la modification de la température de consigne,
où vient s'enclencher une pièce de construction possédant une liaison à effet mécanique avec le dispositif de régulation (15), en particulier de clapet de réglage (23).

12. Une vanne mélangeuse conforme à la revendication 1, où le clapet de réglage (23) tourne en même temps que le disque de commande mobile.

13. Une vanne mélangeuse conforme à l'une des revendications 1 ou 2, où la surface excentrique (24) est formée dans la paroi interne d'un boîtier à cartouche (1).

14. Une vanne mélangeuse conforme à l'une des revendications 1 ou 2, où la surface excentrique (24) est formée dans un poussoir (38) disposé sur la paroi interne d'un boîtier à cartouche (1).

15. Une vanne mélangeuse conforme à la revendication 14, où le poussoir (38) est construit de manière à se déplacer sur la circonférence.

16. Une vanne mélangeuse conforme à l'une des revendications 1 à 5, où le clapet de réglage (23) possède une liaison à effet mécanique avec le dispositif de régulation (15) telle qu'il ne se produit pas de déréglage du dispositif de régulation (15) lors d'un déplacement du disque de commande (9) dans le sens de la modification du débit d'eau.

17. Une vanne mélangeuse conforme à l'une des revendications 1 à 6, où le dispositif de régulation (5) s'engage, à l'aide d'un poussoir coulissant (20), dans une rainure du clapet de réglage (23) située dans le sens du réglage de débit de l'eau.

18. Une vanne mélangeuse conforme à l'une des revendications précédentes,
où aucun joint n'est prévu entre les deux soupapes.

19. Une vanne mélangeuse conforme à l'une des revendications précédentes,
où le dispositif de régulation est constitué d'un thermostat conventionnel avec un élément de dilatation et un boîtier de commande.
